# EUROPÄISCHE PATENTANMELDUNG

(11) **EP 2 216 864 A1**
(43) Veröffentlichungstag der Anmeldung: **11.08.2010**
(21) Anmeldenummer: 09075063.9
(22) Anmeldetag: 09.02.2009
(51) Int. Cl.: H02B 1/04

(54) **System zur Verwaltung von elektrischen und/oder elektronischen Geräten**

(71) Anmelder: EURO-BOX Sp.zo.o., 66-200 Swiebodzin (PL)
(72) Erfinder: Pokorski, Marian, 14197 Berlin (DE); Jakubowski, Bernard, 12305 Berlin (DE)
(74) Vertreter: Boeckh, Tobias

(57) **Zusammenfassung**

Die Erfindung betrifft ein System zur Verwahrung, Verwaltung, Installation und Steuerung von elektrischen und/oder elektronischen Geräten, umfassend einen Rahmen und aktive und passive elektronische Bauteile.

## Beschreibung

Die Erfindung betrifft ein System zur Verwahrung, Verwaltung, Installation und Steuerung von elektrischen und/oder elektronischen Geräten, umfassend einen Rahmen und aktive und passive elektronische Bauteile.

### Stand der Technik

Im Stand der Technik sind Aufbewahrungseinheiten beschrieben, die der Aufbewahrung und Anordnung von elektrischen und/oder elektronischen Geräten dienen und deren Verwaltung ermöglichen. Beispiele dieser Aufbewahrungseinheiten sind Verteilerkästen. Diese Verteilkästen werden hauptsächlich zur Unterbringung von Sicherungs- und Schaltelementen zur Verteilung von elektrischem Strom in Gebäuden verwendet. Des Weiteren werden Verteilerkästen für die Telekommunikation oder Satellitentechnik eingesetzt, in denen ankommende Signale verarbeitet und weitergeleitet werden. Basis dieser Kästen ist ein starres Rahmengestell oder Chassis, das zur Befestigung von Seitenwänden und Türen oder eines Komplettgehäuses dient.

Nachteile der im Stand der Technik beschriebenen Aufbewahrungseinheiten bestehen darin, dass die Verteilerkästen für konkrete Aufgaben gefertigt werden müssen und nicht flexibel einsetzbar sind. Auch ist die Anordnung der Installationen durch das Chassis vorgegeben, wodurch es nur bedingt den Bedürfnissen des Kunden angepasst werden kann, auch sind Installationsarbeiten aufgrund der Bauweise erschwert. Ein besonderer Nachteil ist, dass Elemente der verschiedenen Bereiche, wie z. B. Telekommunikation und Satellitentechnik nicht in einem Kasten oder System kombinierbar sind, wodurch eine optimale Integration in die technische Infrastruktur nicht erreichbar ist.

Im Stand der Technik gab es daher immer wieder Bestrebungen und Versuche, diesen Nachteilen zu begegnen. Es ist beispielweise versucht worden, die Flexibilität und Anwendbarkeit der Schränke durch verschiedene Adaptationen zu erhöhen.

So offenbart die DE 20 2006 006 654 U1 einen Verteilerschrank, insbesondere Serverschrank für den IT-Bereich, welcher an die individuellen Bedürfnissen des Verbrauchers angepasst werden kann. Zentrales Element des Verteilerschrankes ist eine Kabelführungseinheit mit einer Basisplatte, an deren vorderen und hinteren Rand eine Begrenzungswand befestigt ist. Um das Kabelführungselement kann der Verteilerschrank errichtet und mit weiteren Elementen wie Seitenwand usw. ausgestattet werden. Somit kann der Schrank nach dem Baukastenprinzip zusammengebaut werden und ist durch seine flexibel einsetzbare Einschübe gekennzeichnet. Des Weiteren offenbart die DE 201 05 293 U1 ein System für senkrecht stehende Einschübe. Das System enthält zu den im Stand der Technik beschriebenen Merkmalen, Schlitze in der Bodenauflage, in die Verschiebeprofile eingelegt werden können, die auf schrägen Flächen parallel zur Auflagefläche höhenverstellbar gelagert sind. Diese Anordnung der Verschiebeprofile ermöglicht es, Normeinschübe unterschiedlicher Herstellermaße zu befestigt und so die Flexibilität der Verteilerschränke zu verbessern und Einschübe horizontal zu befestigen.

### Detaillierte Beschreibung der Erfindung

Ausgehend von diesem Stand der Technik ist es die Aufgabe der Erfindung, die Verwahrung, Verwaltung, Installation und Steuerung elektrischer und/oder elektronischer Geräte flexibler zu gestalten, so dass der Fachmann einfachen Zugang zu den Geräten hat und diese nach Belieben flexibel gestalten kann.

Gelöst wird diese Aufgabe durch die unabhängigen Ansprüche. Weitere vorteilhafte Ausgestaltungen ergeben sich durch die übrigen Unteransprüchen. Die Erfindung wird nunmehr im Detail beschrieben:

Im Sinne der Erfindung werden unter elektrischen und/oder elektronischen Bauteilen passive und aktive Elemente verstanden und unterschieden:
- Aktive elektronische Bauteile sind beispielsweise - aber nicht abschließend - Verstärker für die Breitbandkommunikationstechnik (Verstärker für Linie A, B oder C, Glasfaser Verstärker, Hausverstärker, Netzteiler), Verstärker für die Terrestrialtechnik (Breitbandverstärker, Bandverstärker, Kanalverstärker, Aktive Verteiler, Aktive Antennenweichen) und Bauteile für die Satellitentechnik (Multiswitch mit Verstärker, Satellitentechnik-Verstärker, Linienverstärker, Netzteiler, Aktive Weichen). Aktive Bauteile sind im Sinne der Erfindung stromführende Elemente.
- Passive elektronische Bauteile sind beispielsweise - aber nicht abschließend - Bauteile für die Breitbandkommunikationstechnik (Hochfrequenz Verteiler, Hochfrequenz Abzweiger, Vielfach Abzweiger (Abzweiger mit 4, 8, 10, 12, 16, 32 Ausgängen), Glasfaserverteiler, Glasfaserabzweiger, Hochfrequenz Filter, Pegeleisteller, Leitingsendzerrer), Bauteile für die Terrestrialtechnik (Antennenweichen, Hochfrequenz Filter, Antennenverteiler, Antennenabzweiger) und Bauteile für die Satellitentechnik (Multiswitch ohne Verstärker, Satellitentechnik Verteiler, Satellitentechnik Abzweiger, Satellitentechnik Hochpässe, Stromversorgungs-weichen, Pegeleitsteller, Leitingsendzerrer, Hochfrequenz Filter, Abschluss-widerstände (75 Ohm)). Passive Bauteile sind im Sinne der Erfindung nicht-stromführende Elemente.

Des Weiteren werden unter Befestigungsmitteln beispielweise Schrauben, Nieten und Winkeleisen verstanden.

Im Sinne der Erfindung wird unter Perforation oder Lochperforation eine Durchlochung einer Montageplatte verstanden, wobei die Anordnung, Menge, Form und Größe der Löcher nicht limitierend wirken sollen, sondern eine bevorzugte Ausführungsform der Erfindung darstellt. Die Montageplatten (erste und weitere Montageplatten) weisen somit Vorstanzungen auf, die hier auch als Perforation oder Lochperforation bezeichnet werden. Es kann sich um eine mehr oder weniger vollständige Vorstanzung einer Montageplatte handeln oder aber um eine Vorstanzung mit nur wenigen Stanzungen (Löchern), zur Aufnahme weiterer Elemente oder zur Befestigung. Sinn dieser mit Stanzungen versehenen Montageplatten ist es, dem Endkunden eine vorkonfigurierte Montageplatte zur Verfügung zu stellen, die eine individuelle Bestückung der Montageplatte mit Bauteilen und anderen Elementen ermöglicht.

Die Erfindung beschreibt mithin ein System zur Verwahrung, Verwaltung, Installation und Steuerung von elektrischen und/oder elektronischen Geräten, umfassend einen Rahmen und aktive und passive elektronische Bauteile. Hierbei dient der Rahmen als Chassis, welches stationär an einem Ort, wie beispielweise einer Wand, in dessen Nähe sich ein Potentialausgang befindet, fixierbar ist. Das erfindungsgemäße

System erlaubt die Verbindung einer oder mehrerer lochperforierter (erster) Montageplatten mit einem Chassis, wobei weitere Montageplatten mit der ersten Montageplatte verbunden sind, welche perforiert oder nicht perforiert sein können. Das Chassis dient der Aufnahme einer ersten Montageplatte und die Montageplatten dienen der Aufnahme aktiver und/oder passiver elektronischer Bauteile, wobei aktive und/oder passive elektronische Bauteile beliebig auf den lochperforierten oder nicht perforierten Montageplatten angeordnet, konfiguriert und befestigt werden können. Dies ermöglicht die Anordnung und Austattung der Montageplatten mit Bauteilen basierend auf den Anforderungen an das System, wodurch das System eine hohe Anpassungsfähigkeit und Vielfältigkeit in sich vereint. Weiterhin ist ein Vorteil des erfindungsgemäßen System, dass das Chassis und die sich darauf befindlichen Montageplatten, mittels eines Gehäuses abdeckbar sind. Um Korrision vorzubeugen sind das Chassis sowie die Montageplatten aus verzinktem Stahlblech hergestellt und das Gehäuse aus korrisionsbeständigem Material, vorzugsweise Stahlblech, gefertigt. Das Material des Gehäuses kann zusätzlich pulverbeschichtet sein. Der Fachmann weiss, dass es sich hierbei um eine Beschichtungsmethode handelt, bei der ein elektrisch leitender Werkstoff mit Pulverlack beschichtet wird, wodurch nicht nur der Werkstoff geschützt wird, sondern die Leitfähigkeit des Werkstoffes unterdbunden wird.

Die weiteren mehr oder weniger vorgestanzten (perforierten) oder nicht-perforierten Montageplatten sind in einem beliebigen Winkel, der auch 0° sein kann, auf der ersten Montageplatte entriegelbar fixierbar. Zur Verbindung dieser weiteren Montageplatten können Befestigungsmittel, vorzugsweise Winkeleisen, verwendet werden, die eine schnelle und flexible Befestigung der Montageplatte ermöglichen. Hierdurch wird dem Fachmann ein leichter Zugang zu den, auf den Montageplatten befindlichen elektrischen und/oder elektronischen Geräten erlaubt und zusätzlich das schnelle Herausnehmen anderer Montageplatten ermöglicht, ohne das komplette System demontieren zu müssen. Zum Zwecke der Verbindung kann die weitere Montageplatte gewinkelt ausgestaltet sein und mittels eines Winkelelementes / Scharniers abklappbar ausgestaltet sein.

Die lochperforierten oder nicht perforierten Montageplatten weisen Ausnehmungen auf, die als Zu- und Abgänge für Kabel dienen. Dies können zum Einen Versorgungskabel für die elektrischen und/oder elektronischen Geräte sein und zum Anderen Kabel von den oben genannten Geräten zu Endgeräten. Hierbei kann es sich beispielweise um Kupfer- und/oder Glasfaserkabel handeln.

Um aktive und/oder passive Bauteile zu befestigen oder weitere Montageplatten anzubringen, sind die Montageplatten vorzugsweise lochperforiert. Die Befestigung der aktiven und/oder passiven Bauteile oder den weiteren Montageplatten auf den Montageplatten erfolgt mittels Befestigungsmittel. Die Anordnung, Größe und Menge der Perforation kann variabel gestaltet werden, wodurch eine hohe Flexibilität, sprich Anordnung der aktiven und/oder passiven Bauteile oder den weiteren Montageplatten auf den Montageplatten erfolgen kann.

Außerdem wird durch die Perforation eine Luftzirkulation gewährt, die der Belüftung der Geräte dient.

Die Montageplatten werden über Aufnahmeeinrichtungen, die der Aufnahme der Montageplatten dienen, an dem Chassis befestigt (z.B. mittels ausgestanzten Löchern, Bohrungen, Verschraubungen). Außerdem weist das Chassis Ortsbefestigungseinrichtigungen auf, mit denen das Chassis und die sich darauf befindlichen Montageplatten, stationär mit einem Ort, beispielweise einer Wand (Hauswand innen oder außen) oder einem Fußboden oder ähnlichem, verbunden werden kann.

Des Weiteren weist das Chassis Einrichtungen zur Aufnahme eines korrespondierenden Gehäuses auf, um die auf den Montageplatten befestigten elektrischen und/oder elektronischen Geräte vor Fremdeinwirkung oder äußeren Einflüssen, auch Vandalismus, zu schützen. Eine Ausnehmung ist in das Gehäuse eingearbeitet, in die ein Schloss eingebracht werden kann und der Verschließung des Gehäuses dient. So wird das System vor Fremdeingriff geschützt. Diese erfindungsgemäßen Merkmale machen es möglich, das System in Gebäuden sowie im Freien zu benutzen. Die durch die elektronischen Geräte entstehende Wärme, kann bei dem erfindungsgemäßen System über Ventilationseinrichtungen und Schlitze im Gehäuse entweichen, bzw. aktiv mittels Ventilationseinrichtungen abgeführt werden. So wird eine Überhitzung und folglich ein Ausfall der Geräte verhindert.

Eine weiteres besonderes Merkmal des erfindungsgemäßen System besteht darin, dass mehrere derartiger Systeme kaskadierend nebeneinander in der Senkrechten oder der Waagerechten, aber nicht gestapelt, angeordnet werden können. Somit steht dem Fachmann ein System zur Verfügung, bei dem verschiedene aktive und/oder passive Elemente und elektrische und/oder elektronische Geräte in einem Gehäuse kombiniert werden können und zusätzlich System unterschiedlicher Funktionen, wie z. B. der Terrestrialtechnik und der Satellitentechnik, nebeneinander angeordnet werden können. Dies vereinfacht die Integration der Systeme in die technische Infrastruktur einer Anlage erheblich.

Ein weiterer Vorteil des erfindungsgemäßen System auch darin zu sehen, dass das System mit allen seinen Komponenten werkstattseitig vorkonfiguriert werden kann und dann vor Ort lediglich noch ortsfest montiert zu werden braucht.

### Ausführungsbeispiele

Die Erfindung wird anhand der von Figuren nunmehr im Detail beschrieben; es zeigt
- Fig. 1: eine schematische Darstellung eines rahmenartigen Chassis;
- Fig. 2: eine schematische Darstellung einer lochperforierten Montageplatte;
- Fig. 3: eine schematische Darstellung einer lochperforierten Montageplatte aufgebracht auf einem Chassis;
- Fig. 4: eine schematische Darstellung einer nicht perforierten und einer lochperforierten Montageplatte aufgebracht auf einem Chassis;
- Fig. 5: eine schematische Darstellung einer Montageplatte mit einem Vielfach-Abzweiger;
- Fig. 6: eine schematische Darstellung von zwei Montageplatten mit Vielfach-Abzweigern, aufgebracht auf einer lochperforierten Montageplatte, befestigt an einem Chassis;
- Fig. 7: eine schematische Darstellung der Bestandteile eines Gehäuses und das zusammengesetzte Gehäuse;

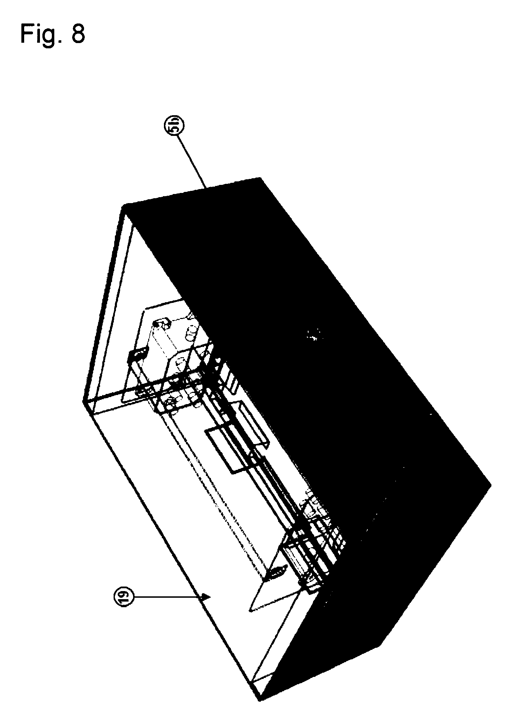

- Fig. 8: Elemente der Figur 6 abgedeckt von einem Gehäuse.

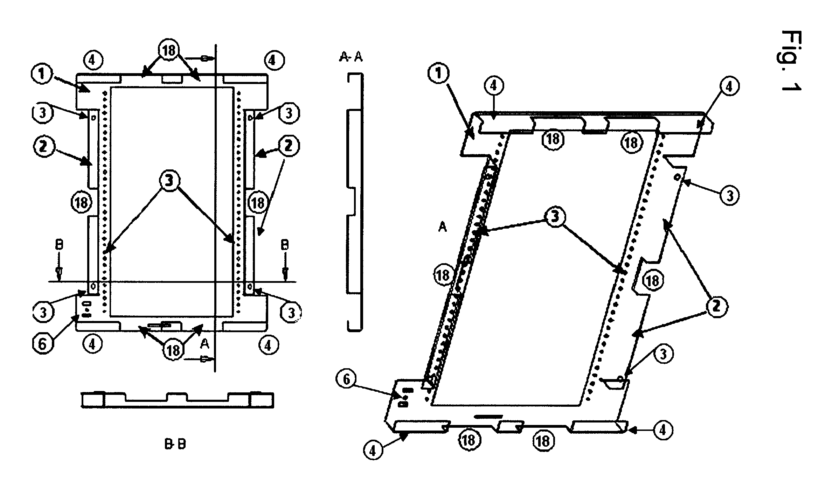

Fig. 1 zeigt in zwei Darstellungen eine Übersichtszeichnung eines Chassis 1. Eine erfindungsgemäße Ausgestaltung des Chassis 1 sind die seitlich angebrachten Ortsbefestigungseinrichtungen 2, die mittels der Bohrung 3 und den entsprechenden Befestigungsmitteln an einem Ort, z. B. einer Wand, stationär befestigt werden können. Nicht dargestellte lochperforierte Montageplatten 5 und/oder weitere Montageplatten 7 können an dem Chassis 1 über die Bohrungen 3 und Befestigungsmittel verbunden werden. Eine weitere besondere Ausführungsform des Chassis 1 sind die Standelemente 4, die das Auflegen des Chassis 1 auf eine Ebene erlauben. Des Weiteren sind Ausnehmungen für die Zu- und Ableitung der Kabel 18 in das Chassis 1 eingearbeitet, die der Verteilung der Kabel dienen. Klemmen für die Erdungsleitung 6 ermöglichen die Erdung des Chassis 1.

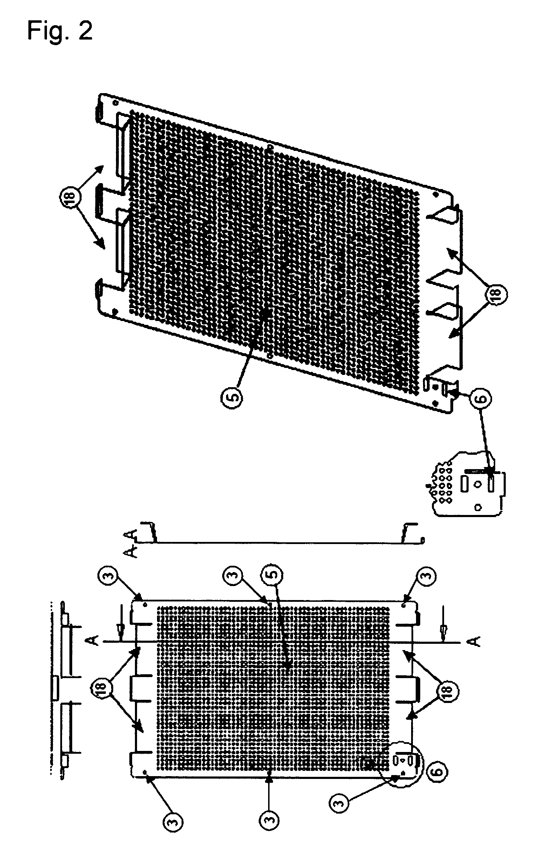

Fig. 2 zeigt in zwei Darstellungen und einem Detailausschnitt beispielhaft eine Übersichtszeichnung einer lochperforierten Montageplatte 5, wobei die Anordnung, Menge und Größe der Perforation beispielhaft gezeigt ist und keine Limitation darstellt. Die lochperforierte Montageplatte 5, weist auf mindestens zwei Seiten Ausnehmungen für die Zu- und Ableitungen von Kabel 18 auf. Die Klemmen der Erdungsleitung 6 dienen der Erdung der Montageplatte 5. Die Montageplatte kann mittels der Bohrungen 3 und entsprechender Befestigungsmittel an einem Chassis 1 befestigt werden. Die Montageplatte 5 dient der Aufnahme von elektrischen und/oder elektronischen Geräten (aktiven und/oder passiven Bauteilen, weiteren Montageplatten 7), welche an den Perforationen 5 mittels Befestigungsmitteln befestigt werden, wobei die Anordnung, Form, Größe und Menge der Perforationen eine flexible Anordnung der Geräte auf den Montageplatten 5 erlaubt.

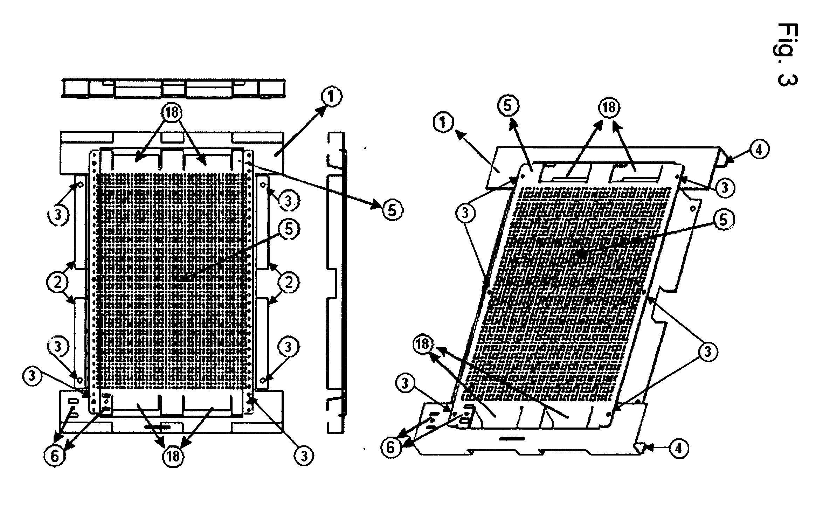

Eine weitere vorteilhafte Ausführungsform ist in zwei Darstellungen schematisch in Fig. 3 gezeigt. Die lochperforierte Montageplatte 5 ist über die Befestigungsvorrichtung 3 auf dem Chassis 1 befestigt. Die erfindungsgemäße Anfertigung des Chassis 1 und der Montageplatte 5 ermöglichen, dass die Standelemente 4 und die Ausnehmungen für die Zu- und Ableitung der Kabel 18 des Chassis 1 und der Montageplatte 5 optimal passen und die Zu- und Ableitung der Kabel erlauben. Die perforierte Montageplatte 5 dient der Aufnahme elektrischer und/oder elektronischer Geräte, welche individuell an den Perforationen befestigt werden können und mittels den Ortsbefestigungseinrichtungen 2 und mithilfe der Bohrungen 3 beispielsweise an einer Wand ortsfest angebracht werden können. Die Erdung der lochperforierten Montageplatte 5 und des Chassis 1 wird über die Klemmen der Erdungsleitung 6 sichergestellt.

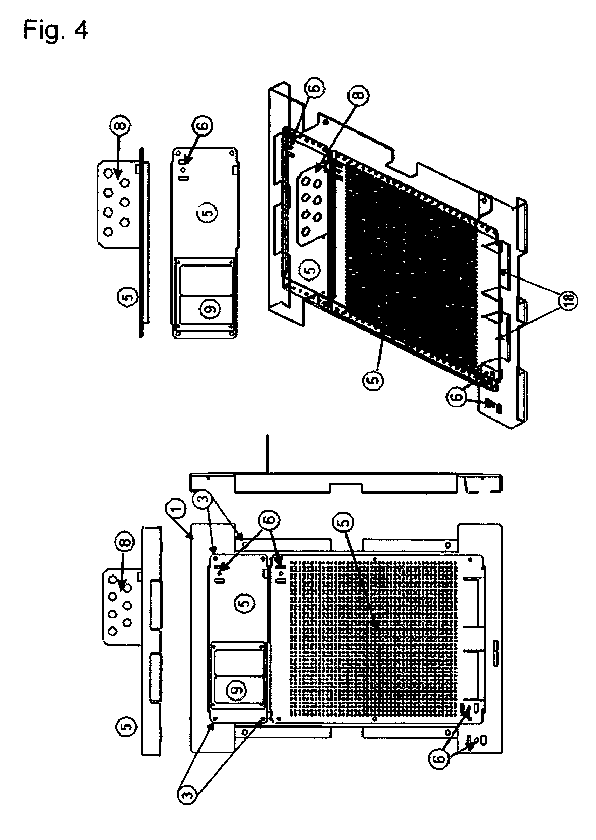

In Fig. 4 ist eine bevorzugte Ausführungsform der Erfindung in mehreren Darstellungen und Detailansichten schematisch dargestellt. In Figur. 4 ist das Chassis 1 mit zwei Montageplatten 5 versehen, wobei eine der Platten nahezu vollständig lochperforiert. Die andere Montageplatte 5 ist nur mit einigen Vorstanzungen (Perforationen) zur Aufnahme und zur Befestigung von Bauteilen, hier beispielhaft ein F-Erdungswinkel 8 und eine Netzsteckdose 9, versehen. Klemmen 6 für Erdungsleitungen sind eingearbeitet.

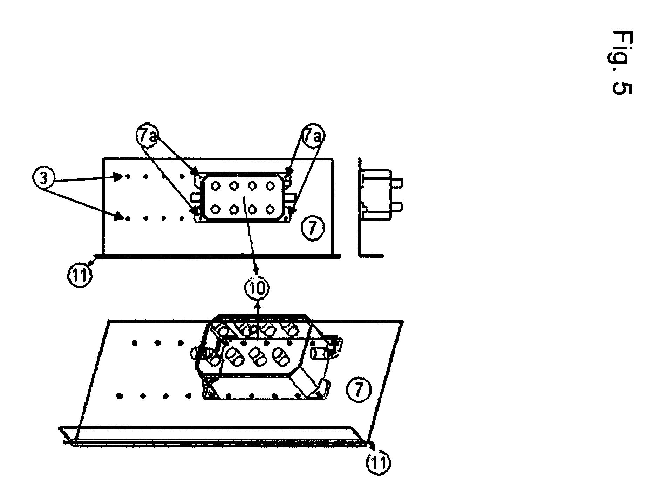

Fig. 5 zeigt schematisch und beispielhaft einen auf einer Montageplatte 7 angeordneten Vielfach-Abzweiger 10 als passives Bauteil. Mehrere Bohrungen 3 in der Montageplatte 7 erlauben die variable Anordnung des Vielfach-Abzweigers 7, der mittels Befestigungsvorrichtungen 7a auf der Montageplatte 7 befestigt ist. Die weitere Montageplatte 7 ist weiterhin mit einem Winkeleisen 11 ausgestattet.

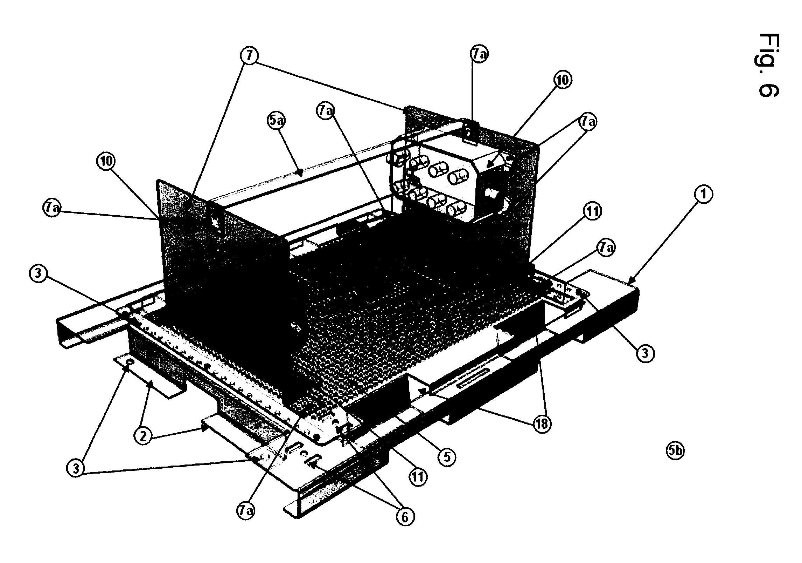

Fig. 6 zeigt zwei nicht perforierte Montageplatten 7, an denen jeweils ein Vielfach-Abzweiger 10 mittels Befestigungsvorrichtungen 7a befestigt ist, sind auf einer lochperforierten Montageplatte 5 montiert. Die hier nicht-perforierten Montageplatten 7 können variabel auf den lochperforierten Montageplatten 5 mittels Befestigungsvorrichtungen angeordnet werden und sind durch Stabilisierungselemente 5a stabilisiert. Die an den nicht perforierten Montageplatten angebrachten Winkeleisen 11 ermöglichen, die schnelle und flexible Verbindung der nicht perforierten Montageplatten 7 mit den lochperforierten Montageplatten 5. Die Montageplatte 5 ist über Bohrungen 3 auf dem Chassis 1 befestigt, wodurch eine Kombination 5b aus einer lochperforierten Montageplatte 5, die auf einem Chassis 1 angebracht ist, und zwei weiteren Montageplatten 7, die wiederum auf der lochperforierten Montageplatte 5 in einem beliebigen Winkel entriegelbar fixiert sind, entsteht. Das Chassis 1 kann beispielweise mittels den Ortbefestigungseinrichtungen 2 an einem Ort stationär befestigt werden. Die Erdung der Montageplatten sowie des Chassis 1 ist über die Klemmen der Erdungsleitung 6 realisierbar. Kabel werden über die Ausnehmungen für Zu- und Ableitung von Kabel 18 zu- oder abgeleitet.

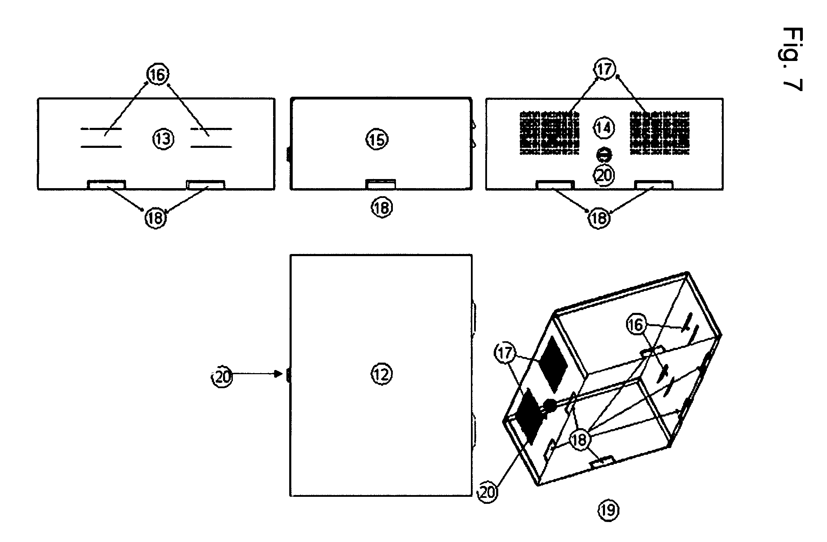

Eine Übersichtzeichnung des Gehäuses ist in Fig.7 in mehreren Darstellungen gezeigt. Hierbei werden die Vorderseite des Gehäuses 12 mit dem Oberteil 13, Unterteil 14 und den Seiten 15 des Gehäuses zu einer Einheit 19 zusammengesetzt. Um eine Erhitzung und folglich Ausfall der integrierten elektrischen Geräte zu verhindern, sind Lüftungsschlitze 16 im Oberteil des Gehäuses 13 und Ventilationsöffnungen 17 im Unterteil des Gehäuses 14 vorgesehen. Die Zu- und Ableitung von Kabeln wird durch zusätzliche Ausnehmungen 18 im Gehäuse 19 vereinfacht. Des Weiteren ist eine Ausnehmung 20 im Gehäuse vorgesehen, die beispielweise für ein Schloss 20 verwendet werden kann, um so Fremdeingriff zu verhindern.

Fi. 8 zeigt schematisch eine bevorzugte Ausführungsform der Erfindung, bei der die Ausführungsform 5b mit dem Gehäuse 19 verbunden sind. Hierbei ist das, die nicht perforierte Montageplatte 7 und lochperforierten Montageplatten 5 tragende Chassis 1, mittels Befestigungsmitteln mit dem Gehäuse 19 verbunden. Aus dem Inneren des Gehäuses 19 kommende oder in das Gehäuse 19 laufende Kabel, werden über Ausnehmungen 18 zu- und/oder abgeleitet. Der Fachmann erhält Zugang zu dem Inneren des Systems über ein in die Ausnehmung 20 des Gehäuses 19 eingebrachtes Schloss, und kann Arbeiten an den Vielfach-Abzweigern 10 vornehmen. Hierbei kann der Fachmann die beiden über das Stabilisierungselement 5a verbundenen und über die Winkeleisen 11 und die Befestigungsvorrichtungen 7a befestigten Montageplatten 7 einfach aus dem System herausnehmen ohne das komplette System zu demontieren.

### Bezugszeichenliste

- 1: Chassis
- 2: Ortsbefestigungseinrichtungen
- 3: Aufnahmeeinreichtung (Bohrung / Stanzung))
- 4: Standelemente
- 5: Lochperforierte Montageplatte
- 5a: Stabilisierungselement
- 5b: Lochperforierte Montageplatte mit zwei Montageplatten befestigt auf Chassis
- 6: Klemmen der Erdungsleitung
- 7: Montageplatte
- 7a: Befestigungsvorrichtung
- 8: F-Erdungswinkel (passives Bauteil)
- 9: Netzsteckdose (aktives Bauteil)
- 10: Vielfach-Abzweiger (passives Bauteil)
- 11: Winkeleisen
- 12: Vorderseite des Gehäuses
- 13: Oberteil des Gehäuses
- 14: Unterteil des Gehäuses
- 15: Seiten des Gehäuses
- 16: Lüftungsschlitze
- 17: Ventilationsöffnung
- 18: Ausnehmung für die Zu- und Ableitung von Kabel
- 19: Zusammengesetztes Gehäuse
- 20: Ausnehmung

## Patentansprüche

1. System zur Verwahrung, Verwaltung, Installation und Steuerung von elektrischen und/oder elektronischen Geräten, umfassend einen Rahmen und aktive und passive elektronische Bauteile, **gekennzeichnet dadurch, dass**
a. der Rahmen als Chassis (1) dient, welches stationär an einem Ort mit Potentialausgang fixierbar ist,
b. und eine oder mehrere mit Stanzungen versehenen Montageplatten (5) mit dem Chassis verbunden sind, wobei auf den Montageplatten (5) oder einer weiteren Montageplatte (7), die mit der ersten Montagplatte (5) verbunden ist, die aktiven und/oder passiven elektronischen Bauteile beliebig angeordnet, konfiguriert und befestigt sind, und
c. das Chassis (1) mittels eines Gehäuses (19) abdeckbar ist.

2. System nach Anspruch 1, wobei die weitere Montageplatte (7) in einem beliebigen Winkel auf der ersten Montageplatte (5) entriegelbar fixierbar ist.

3. System nach Anspruch 2, wobei die weitere Montageplatte (7) zum Zwecke der Verbindung mit einer ersten Montageplatte (5) gewinkelt ausgestaltet ist.

4. System nach einem oder mehreren der vorhergehenden Ansprüche, wobei die Montageplatten (5) Zu- und Abgänge (18) für Versorgungskabel zu den Endgeräten aufweisen.

5. System nach einem oder mehreren der vorhergehenden Ansprüche, wobei die Montageplatten (5) vollständig lochperforiert sind und die aktiven und/oder passiven Bauteile, sowie gegebenenfalls weitere Montageplatten (7) an diesen befestigbar sind.

6. System nach einem oder mehreren der vorhergehenden Ansprüche, wobei das Chassis (1) Aufnahmeeinrichtungen zur Aufnahme der Montageplatten (5), sowie Ortsbefestigungseinrichtungen (2) und Einrichtungen zur Aufnahme eines korrespondierenden Gehäuses (19) aufweist.

7. System nach Anspruch 6, wobei das Chassis (1) eine Ausnehmung (20) zur Verriegelung mit dem Gehäuse (19) aufweist.

8. System nach einem oder mehreren der vorhergehenden Ansprüche, wobei das Chassis (1) und die Montageplatten (5, 7) aus verzinktem Stahlblech bestehen.

9. System nach einem oder mehreren der vorhergehenden Ansprüche, wobei das Gehäuse (19) aus korrosionsbeständigem Material gefertigt ist, vorzugsweise Stahlblech.

10. System nach einem oder mehreren der vorhergehenden Ansprüche, wobei das Gehäuse (19) Ventilationseinrichtungen (17) aufweist.

11. System nach einem oder mehreren der vorhergehenden Ansprüche 1 bis 10, wobei die aktiven Bauteile stromführend sind.

12. System nach einem oder mehreren der vorhergehenden Ansprüche 1 bis 10, wobei die passiven Bauteile nicht-stromführend sind

13. System nach einem oder mehreren der vorhergehenden Ansprüche 1 bis 12, wobei mehrere derartiger Systeme kaskadierend nebeneinander angeordnet sind.

14. Montageplatte (5, 7) zur Aufnahme von aktiven und/oder passiven Bauteilen, als Bestandteil eines Systems nach den Ansprüchen 1 bis 13.

15. Chassis (1) zur Aufnahme einer oder mehrerer Montageplatten (5, 7) nach Anspruch 14 als Bestandteil eines Systems nach den Ansprüchen 1 bis 13.
